(19) Europäisches Patentamt
European Patent Office
Office européen des brevets

(11) **EP 4 119 615 A1**

(12) **EUROPEAN PATENT APPLICATION**
published in accordance with Art. 153(4) EPC

(43) Date of publication:
**18.01.2023 Bulletin 2023/03**

(21) Application number: **21767244.3**

(22) Date of filing: **10.03.2021**

(51) International Patent Classification (IPC):
**C08L 91/00** (2006.01)     **C08L 101/12** (2006.01)
**C09K 5/14** (2006.01)      **C08K 3/013** (2018.01)
**C08K 3/34** (2006.01)

(52) Cooperative Patent Classification (CPC):
**C08K 3/013; C08K 3/34; C08L 91/00;
C08L 101/12; C09K 5/14**

(86) International application number:
**PCT/JP2021/009671**

(87) International publication number:
**WO 2021/182548 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2020 JP 2020041982**

(71) Applicant: **SUMITOMO METAL MINING CO., LTD.**
**Tokyo**
**105-8716 (JP)**

(72) Inventors:
• **KOBAYASHI Hiroshi**
**Ome-shi, Tokyo 198-0025 (JP)**
• **KIBE Tatsuo**
**Ome-shi, Tokyo 198-0025 (JP)**
• **KASHIWAYA Satoshi**
**Ome-shi, Tokyo 198-0025 (JP)**

(74) Representative: **Jones, Nicholas Andrew**
**Withers & Rogers LLP**
**2 London Bridge**
**London SE1 9RA (GB)**

(54) **THERMALLY CONDUCTIVE COMPOSITION**

(57) Provided is a thermally conductive composition that is capable of effectively suppressing pump out. Specifically provided is a thermally conductive composition that contains a base oil composition and an inorganic powder filler, wherein: the base oil composition contains a base oil, a thermoplastic resin that has a softening point of 50-150°C, and a thixotropic agent; and when shaped into a thermally conductive sheet of the thermally conductive composition at a temperature not less than the softening point of the thermoplastic resin, the type-A hardness (in compliance with JIS K 6253-3) of the thermally conductive sheet as measured using a durometer is 30-80.

EP 4 119 615 A1

## Description

TECHNICAL FIELD

The present invention relates to a thermally conductive composition to be used between a heat generating component and a heat dissipating component.

BACKGROUND ART

In an electronic device, a heat dissipating component such as a heat sink is attached to dissipate heat generated from heat generating components such as semiconductor elements and mechanical parts. In order to efficiently transfer heat to the heat dissipating component, a thermally conductive member is sandwiched between the heat generating component and the heat dissipating component. The thermally conductive members (thermally conductive compositions) include a solid thermally conductive sheet, liquid thermally conductive grease, curable thermally conductive grease that changes from a liquid state to a solid state, and the like, and are used according to applications of use.

For example, Patent Document 1 discloses a thermally conductive composition containing a base oil including a copolymer of unsaturated dicarboxylic acid dibutyl ester and α-olefin, and a thermally conductive filler. Patent Document 1 mentions that the thermally conductive grease has high thermal conductivity, and good dispensability and compressibility.

However, such thermally conductive composition is in a form of a paste at ambient temperature and flows when pressurized, so that it is easily applied on the coating film and has excellent adhesion, but there is a problem that such thermally conductive grease easily flows out from a coated part by expansion and contraction of a heat generating component or the like caused by repetition of heat generation and heat dissipation and has inferior pump-out resistance. Note here that, pump-out refers to a phenomenon in which thermally conductive grease protrudes from the coated part, and voids (air gaps) are generated inside the grease, and good thermal conductivity cannot be maintained.

In order to solve these problems, a thermally conductive composition, which has properties of being solid at ambient temperature, but adhering to an adherend by absorbing heat and being softened after being incorporated into a heat generating component and which is capable of reducing thermal resistance, is being developed (see, for example, Patent Documents 2 to 4). Information relating to technologies of thermally conductive compositions is disclosed in, for example, Japanese Unexamined Patent Application, Publication No. 2001-89756 (Patent Document 2), Japanese Unexamined Patent Application, Publication No. 2004-75760 (Patent Document 3), and Japanese Unexamined Patent Application, Publication No. 2007-150349 (Patent Document 4).

Patent Document 1: Japanese Patent No. 4713161
Patent Document 2: Japanese Unexamined Patent Application, Publication No. 2001-89756
Patent Document 3: Japanese Unexamined Patent Application, Publication No. 2004-75760
Patent Document 4: Japanese Unexamined Patent Application, Publication No. 2007-150349

DISCLOSURE OF THE INVENTION

Problems to be Solved by the Invention

However, with the above-mentioned conventional technologies, the pump-out resistance were insufficient in some cases.

The present invention has been proposed in view of such circumstances, and has an object to provide a thermally conductive composition capable of effectively suppressing occurrence of pump-out.

Means for Solving the Problems

The present inventors have extensively studied in order to achieve the above-mentioned objects, and, as a result, they have found that the above-mentioned problems can be solved by controlling the content of each component included in the thermally conductive composition and allowing a formed thermally conductive sheet to have predetermined hardness, and have reached completion of the present invention.

(1) A first aspect of the present invention is a thermally conductive composition including a base oil composition and an inorganic powder filler, the base oil composition including a base oil, a thermoplastic resin having a softening point of 50°C or more and 150°C or less, and a thixotropy adjusting agent, a thermally conductive sheet formed of the thermally conductive composition at a temperature being not lower than the softening point of the thermoplastic resin having a type A hardness of 30 or more and 80 or less as measured by a durometer (in accordance with JIS K 6253-3).

(2) A second invention of the present invention is a thermally conductive composition in the first invention, in which the inorganic powder filler includes a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler, and in which the inorganic powder filler have the average particle diameters satisfying the following formulae (1) and (2) .

$$D_2/D_1 \ < \ 0.70 \quad (1)$$

$$D_3/D_2 \ < \ 0.60 \quad (2)$$

[In the formulae, $D_1$ represents an average particle diameter of the first inorganic powder filler, $D_2$ represents an average particle diameter of the second inorganic powder filler, and $D_3$ represents an average particle diameter of the third inorganic powder filler.]

(3) A third aspect of the present invention is the thermally conductive composition in the second aspect, in which the second inorganic powder filler has an average particle diameter in a range of 1 $\mu$m or more and 50 $\mu$m or less, and the third inorganic powder filler has an average particle diameter in a range of 0.1 $\mu$m or more and 5 $\mu$m or less.

(4) A fourth aspect of the present invention is a thermally conductive composition in the second aspect or the third aspect, including 40 parts by mass or more and 80 parts by mass or less of the first inorganic powder filler, 10 parts by mass or more and 50 parts by mass or less of the second inorganic powder filler, and 10 parts by mass or more and 40 parts by mass or less of the third inorganic powder filler, with respect to 100 parts by mass of the inorganic powder filler.

(5) A fifth aspect of the present invention is the thermally conductive composition in any one of the first aspect to the fourth aspect, in which the inorganic powder filler contains at least one or more types selected from copper, aluminum, zinc oxide, magnesium oxide, aluminum oxide, aluminum nitride, and silicon carbide.

(6) A sixth aspect of the present invention is the thermally conductive composition in any one of the first aspect to the fifth aspect, in which a total of the base oil and the thermoplastic resin is in a ratio of 5.3 parts by mass or more and 33.3 parts by mass or less with respect to 100 parts by mass of the inorganic powder filler.

(7) A seventh aspect of the present invention is the thermally conductive composition in any one of the first aspect to the sixth aspect, containing 50 parts by mass or more and 200 parts by mass or less of the thermoplastic resin with respect to 100 parts by mass of the base oil.

(8) An eighth aspect of the present invention is the thermally conductive composition in any one of the first aspect to the seventh aspect, in which the base oil contains at least one or more types selected from a mineral oil, a synthetic hydrocarbon oil, a diester, a polyol ester, and a phenyl ether.

(9) A ninth aspect of the present invention is the thermally conductive composition in any one of the first aspect to the eighth aspect, in which the thermoplastic resin is at least one or more resins selected from an ester resin, an acrylic resin, a rosin resin, and a cellulose resin.

(10) A tenth aspect of the present invention is the thermally conductive composition in any one of the first aspect to the ninth aspect, in which the thixotropy adjusting agent contains at least one or more types selected from bentonite, mica, kaolin, sepiolite, saponite, and hectorite.

(11) An eleventh aspect of the present invention is the thermally conductive composition in any one of the first invention to the tenth aspect, containing 1 part by mass or more and 10 parts by mass or less of the thixotropy adjusting agent with respect to 100 parts by mass of the base oil.

Effects of the Invention

The thermally conductive composition of the present invention can effectively suppress occurrence of pump-out.

PREFERRED MODE FOR CARRYING OUT THE INVENTION

Hereinafter, specific embodiments of the present invention (hereinafter, referred to as "the present embodiments") will be described in detail. The present invention is not limited to the following embodiments, and can be carried out with appropriate modifications within the scope of the object of the present invention.

<<Thermally conductive composition>>

The thermally conductive composition according to the present embodiment contains a base oil composition and an inorganic powder filler. The base oil composition contains a base oil, a thermoplastic resin having a softening point of 50°C or more and 150°C or less, and a thixotropy adjusting agent, and the thermally conductive sheet has predetermined hardness by controlling the content of each component included in the thermally conductive composition.

The study by the present inventors has revealed the followings. In other words, when the thermally conductive composition includes a base oil composition containing a predetermined amount of a base oil, the thermally conductive composition can be rich in flexibility and have good handling property. Thus, for example, a thermally conductive sheet can be easily formed from the thermally conductive composition, and a heat generating component and a heat dissipating component can be allowed to closely adhere to each other via the thus-formed thermally conductive sheet.

Furthermore, when the base oil composition includes a thermoplastic resin having a softening point of 50°C or more and 150°C or less in a predetermined content, the formed thermally conductive sheet is softened at a predetermined temperature or more, thus causing a so-called phase-change. Thus, for example, at time of high temperature by heat generation from the heat generating component, fluidity of the formed thermally conductive sheet is increased, the thermally conductive composition can spread more uniformly, and a thinner film can be formed. Thus, since an interval between the heat generating component and the heat dissipating component becomes narrower and has high adhesion, the thermal resistance can be lowered, and the heat conductive efficiency can be improved.

On the other hand, as a subsequent temperature drop, the thermally conductive composition that has uniformly spread hardens at a temperature less than a predetermined temperature based on the softening point of the thermoplastic resin to cause a phase change, and is returned to a semi-solid state with moderate hardness. In the thermally conductive composition according to the present embodiment, the thermally conductive sheet of the thermally conductive composition is formed at a temperature not less than the softening point, and type A hardness of the thermally conductive sheet measured by a durometer is made to be 30 or more and 80 or less by controlling contents of the components included in the thermally conductive composition. Thus, while the adhesion between the heat generating component and the heat dissipating component is maintained, the outflow of the base oil can be prevented by the networked resin and the pump out can be effectively suppressed.

The hardness of the thermally conductive sheet specifically means hardness of the thermally conductive sheet, measured by a durometer of the thermally conductive sheet (in accordance with JIS K 6253-3) when the thermally conductive sheet of the thermally conductive composition is formed at a temperature not less than the softening point of the thermoplastic resin. When the type A hardness of the thermally conductive sheet measured by a durometer is 30 or more, the pump-out can be effectively suppressed. When the hardness of the thermally conductive sheet is 80 or less, the fluidity of the thermally conductive composition is increased and the thermally conductive sheet spreads more uniformly.

A thermally conductive sheet of the thermally conductive composition is formed such that a film thickness is 0.5 mm, and the film thickness when a pressure of 0.1 MPa is applied to the thermally conductive sheet at 80°C is preferably 200 $\mu$m or less, more preferably 150 $\mu$m or less, and further preferably 100 $\mu$m or less. As a result, the space between the heat generating component and the heat dissipating component becomes narrow, the thermal resistance can be further reduced, and the heat conductive efficiency can be improved.

Furthermore, the thermally conductive composition according to the present embodiment can be easily formed into a thermally conductive sheet. For example, a thermally conductive sheet is transported in a state in which the thermally conductive sheet is disposed on a surface of the heat generating component, and the heat generating component and the heat dissipating component may be joined to each other via a thermally conductive sheet at the transport destination.

Hereinafter, a base oil composition included in the thermally conductive composition and an inorganic powder filler will be described.

<1. Base oil composition>

The base oil composition contains at least a base oil, a thermoplastic resin, and a thixotropy adjusting agent. Each component contained in the base oil composition will be described.

(1) Base oil

As the base oil, various base oils can be used, and examples thereof include a mineral oil, a hydrocarbon base oil such as a synthetic hydrocarbon oil, an ester-based oil, an ether-based oil, a phosphate ester, a silicone oil, a fluorine oil, and the like. Among them, a base oil containing at least one or more types selected from a mineral oil, a hydrocarbon-based oil such as a synthetic hydrocarbon oil, an ester-based oil, and an ether-based oil, is preferably used.

As the mineral oil, for example, the mineral oil-based lubricating oil fraction is purified by a suitable combination of refining methods such as solvent extraction, solvent dewaxing, hydrorefining, hydrocracking, and wax isomerization, and a 150 neutral oil, a 500 neutral oil, a bright stock, a high viscosity index base oil, or the like, can be used. The mineral oil used as the base oil is preferably a highly hydrogenated high viscosity index base oil.

As the synthetic hydrocarbon oil, for example, a poly-α-olefin such as normal paraffin, isoparaffin, polybutene, polyisobutylene, 1-decene oligomer, co-oligomer of 1-decene and ethylene, or a hydride thereof can be used alone or in a mixture of two or more kinds. Among them, poly-α-olefin is more preferred. Alkylbenzene, alkylnaphthalene, or the like, can also be used.

Examples of the ester base oil include diester and polyol ester. Examples of the diester include an ester of a dibasic acid such as adipic acid, azelaic acid, sebacic acid, and dodecanedioic acid. The dibasic acid is preferably aliphatic dibasic acid having 4 or more and 36 or less carbon atoms. The alcohol residue constituting the ester part is preferably a monohydric alcohol residue having 4 or more and 26 or less carbon atoms. The polyol ester is an ester of neopentyl polyol in which no hydrogen atom exists on the carbon at the β-position, and specific examples thereof include carboxylic acid ester such as neopentyl glycol, trimethylolpropane, and pentaerythritol. The carboxylic acid residue constituting the ester portion is preferably a monocarboxylic acid residue having 4 or more and 26 or less carbon atoms.

Examples of the ether-based base oil include polyglycol, (poly) phenyl ether, and the like. Examples of the polyglycol include polyethylene glycol, polypropylene glycol, and derivatives thereof. Examples of the (poly) phenyl ether include alkylated diphenyl ethers such as monoalkylated diphenyl ethers and dialkylated diphenyl ethers, alkylated tetraphenyl ethers such as monoalkylated tetraphenyl ethers and dialkylated tetraphenyl ethers, and alkylated pentaphenyl ethers such as pentaphenyl ethers, monoalkylated pentaphenyl ethers, and dialkylated pentaphenyl ethers.

The dynamic viscosity of the base oil is preferably 10 mm$^2$/s or more and 1200 mm$^2$/s or less at 40°C. The base oil having dynamic viscosity at 40°C of 10 mm$^2$/s or more is preferable because evaporation of the base oil and oil separation at a high temperature tend to be suppressed. Furthermore, when the base oil having dynamic viscosity at 40°C of 1200 mm$^2$/s or less is used, a thermally conductive composition that can be easily handled is achieved, and when the phase-change occurs, sufficient fluidity can be obtained.

(2) Thermoplastic resin

The thermoplastic resin softens the thermally conductive composition to impart fluidity at a high temperature. As the thermoplastic resin, one having a softening point of 50°C or more and 150°C or less is used. Note here that the softening point is a temperature at which the thermoplastic resin softens and starts to be deformed when thermoplastic resin is heated. The softening point can be measured using, for example, a melt-mass flow rate measuring machine.

As the thermoplastic resin having a softening point of 50°C or more and 150°C or less, at least one or more resins selected from an ester resin, an acrylic resin, a rosin resin, and a cellulose resin are preferably contained. Furthermore, a mixture obtained by mixing a thermoplastic resin such as wax with various compounds such as a rosin derivative may be used.

The content of the thermoplastic resin is not particularly limited as long as the type A hardness of the formed thermally conductive sheet, measured by a durometer, is 30 or more and 80 or less, but the thermoplastic resin is contained in the content of 50 parts by mass or more and 200 parts by mass or less with respect to 100 parts by mass of base oil. When the content is less than 50 parts by mass, even when a phase-change of the thermally conductive composition occurs, sufficient fluidity is not obtained, and furthermore, the pump-out resistance is not obtained in some cases. When the content is more than 200 parts by mass, the thermally conductive composition is hardened, and forming such as sheet forming cannot be carried out in some cases.

Note here that the total of the base oil and the thermoplastic resin is preferably 5.3 parts by mass or more and 33.3 parts by mass or less with respect to 100 parts by mass of the below-mentioned inorganic powder filler. In such a range, the thermal conductivity of the thermally conductive composition is improved, and forming such as forming a sheet can be performed more easily. Furthermore, at high temperature, the fluidity of the formed thermally conductive sheet is enhanced, the thermally conductive composition spreads more uniformly and can be formed into a thin film.

(3) Thixotropy adjusting agent

The thixotropy adjusting agent imparts pump-out resistance to the thermally conductive composition.

Examples of the thixotropy adjusting agent include organically treated bentonite, organically treated sepiolite, urea compounds, sodium terephthalamate, polytetrafluoroethylene, silica gel, mica, kaolin, saponite, and hectorite.

The content of the thixotropy adjusting agent is not particularly limited as long as the type A hardness of the formed thermally conductive sheet measured by a durometer is 30 or more and 80 or less, but the thixotropy adjusting agent is contained in the content of 1 part by mass or more and 10 parts by mass or less with respect to 100 parts by mass of the base oil. When the content is less than 1 part by mass, the pump-out resistance cannot be obtained in some cases. When the content is more than 10 parts by mass, the thermally conductive composition is hardened, and forming such as sheet forming cannot be carried out in some cases.

(4) Other additives

In order to enhance various properties of a thermally conductive composition, additives including at least one or more agents selected from an antioxidant agent, a diffusion inhibitor, and a dispersing agent can be contained.

The antioxidant agent prevents oxidation of the base oil contained in the base oil composition. Examples of the antioxidant agent include compounds such as hindered amine, hindered phenol, sulfur, phosphorus, benzotriazole, triazine, benzophenone, benzoate, and HALS.

Examples of the dispersing agent include a polyglycerol monoalkyl ether compound, a compound having a carboxylic acid structure such as a fatty acid ester, a polycarboxylic acid-based compound, and the like. These may be used alone or in combination of two or more thereof. In particular, a polyglycerol monoalkyl ether compound, a compound having a carboxylic acid structure, and a polycarboxylic acid-based compound are preferably used in combination.

The contents of these other additives are preferably more than 0 parts by mass and less than 20 parts by mass with respect to 100 parts by mass of the base oil composition.

<2. Inorganic powder filler>

The inorganic powder filler imparts high thermal conductivity to a thermally conductive composition. As the inorganic powder filler to be used for the thermally conductive composition of the present embodiment, an inorganic powder filler having one type of average particle diameter may be used, or a plurality of inorganic powder fillers having different average particle diameters may be used.

When a plurality of inorganic powder fillers having different average particle diameters is used, for example, three types of inorganic fillers having different average particle dimeters including a first inorganic powder filler having an average particle diameter in a range of 10 $\mu$m or more and 100 $\mu$m or less, a second inorganic powder filler having an average particle diameter being different from the average particle diameter of the first inorganic powder filler, and a third inorganic powder filler having an average particle diameter being different from the average particle diameters of the first inorganic powder filler and the average particle diameter of the second inorganic powder filler can be used.

Then, preferably, the average particle diameters of the inorganic powder fillers satisfy the following formulae (1) and (2).

$$D_2/D_1 < 0.70 \quad (1)$$

$$D_3/D_2 < 0.60 \quad (2)$$

[In the formulae, $D_1$ represents an average particle diameter of the first inorganic powder filler, $D_2$ represents an average particle diameter of the second inorganic powder filler, and $D_3$ represents an average particle diameter of the third inorganic powder filler.]

When the first, second, and third inorganic powder fillers having a predetermined relation of average particle diameters are contained, it is possible to reduce the base oil entering a gap between particles of the inorganic powder filler. Therefore, the thermally conductive composition can spread more uniformly in a state in which the content of the inorganic powder filler is increased. By increasing the content of the inorganic powder filler, the thermal conductivity of the thermally conductive composition itself can be sufficiently enhanced, and by allowing the thermally conductive composition to spread more uniformly, a space between the heat generating component and the heat dissipating component becomes narrow, and thermal resistance can be further lowered. Thereby, thermal conductive efficiency can be further improved.

The average particle diameter of the second inorganic powder filler is not particularly limited as long as the above formulae are satisfied, but the average particle diameter is preferably in a range of 1 $\mu$m or more and 50 $\mu$m or less. The thermally conductive composition can spread more uniformly in a state in which the content of the inorganic powder filler is increased, and thermal conductive efficiency can be further improved.

The average particle diameter of the third inorganic powder filler is not particularly limited as long as the above formulae are satisfied, but the average particle diameter is preferably in a range of 0.1 $\mu$m or more and 5 $\mu$m or less.

Thus, the thermally conductive composition can spread more uniformly in a state in which the content of the inorganic powder filler is increased, and thermal conductive efficiency can be further improved.

The content of each of the first, second, and third inorganic powder fillers is not particularly limited, but it is preferable that the content of the first inorganic powder filler is 40 parts by mass or more and 80 parts by mass or less, the content of the second inorganic powder filler is 10 parts by mass or more and 50 parts by mass or less, and the content of the third inorganic powder filler is 10 parts by mass or more and 40 parts by mass or less, respectively, with respect to 100 parts by mass of the inorganic powder filler. When the content of each of the first, second, and third inorganic powder fillers is in such a range, the thermally conductive composition can spread more uniformly in a state in which the content of the inorganic powder filler is increased, and thermal conductive efficiency can be still improved.

Types of the inorganic powder filler to be used for the thermally conductive composition of the present embodiment are not particularly limited as long as they have higher thermal conductivity than the base oil, and, for example, powders such as metallic oxide, inorganic nitride, metal (also including an alloy), a silicon compound, and the like, are preferably used. As the inorganic powder filler of the present invention, one type may be used, or two or more types may be used in combination.

For obtaining electrical insulation, powders of nonconductive materials of semiconductor or ceramic, such as zinc oxide, magnesium oxide, aluminum oxide, aluminum nitride, boron nitride, silicon carbide, silica, and diamond can be preferably used, powder of zinc oxide, magnesium oxide, aluminum oxide, aluminum nitride, boron nitride, silicon carbide, and silica is more preferable, and powder of zinc oxide, aluminum oxide and aluminum nitride is particularly preferable. These inorganic powder fillers may be alone or two or more thereof may be used in combination.

When metal is used as the inorganic powder filler, powder of copper, aluminum, and the like, can be used.

Note here that the first, second, and third inorganic powder fillers mean inorganic powder fillers having a predetermined average particle diameter, and may include inorganic powder fillers having different materials. For example, the first inorganic powder filler may be an inorganic powder filler made of one type of material, or may be an inorganic powder filler made of two types or more materials as long as an average particle diameter is the same. The same is true to the second and third inorganic powder fillers.

Furthermore, the thermally conductive composition of the present embodiment may contain an inorganic powder filler having different average particle diameter, other than the above first, second, and third inorganic powder fillers. However, the content of the first, second, and third inorganic powder fillers contained in the thermally conductive composition of the present embodiment is preferably 80% by mass or more, more preferably 90% by mass or more, further preferably 95% by mass or more, further more preferably 99% by mass or more, and the most preferably 100% by mass (in other words, inorganic powder fillers having different average particle diameter other than the above first, second, and third inorganic powder fillers are not contained) with respect to 100% by mass of the inorganic powder filler.

Note here that in the thermally conductive composition according to the present embodiment, the average particle diameter of the inorganic powder filler can be calculated as volume average diameter of particle size distribution measured by the laser diffraction scattering method (in accordance with JIS R 1629: 1997).

The content of the inorganic powder filler is preferably 50% by mass or more and 90% by mass or less, and more preferably 60% by mass or more and 90% by mass or less with respect to 100% by mass of thermally conductive composition. The content is preferably 50% by mass or more, because the thermal conductivity of the thermally conductive composition itself can be sufficiently enhanced, and oil separation of the base oil can be suppressed to suppress leakage of the base oil. On the other hand, when the content is 93% by mass or less, deterioration of consistency is suppressed, and at the time of heating, the thermally conductive composition can spread more uniformly. Thus, thermal conduction efficiency can be further improved.

<3. Method for producing thermally conductive composition>

A method for producing the thermally conductive composition of the present embodiment is not particularly limited as long as components can be mixed uniformly. In a general production method, kneading is carried out using a planetary mixer, a rotation-revolution mixer, and the like, and uniformly kneading is carried out using a three-roll mill.

<4. Thermally conductive sheet and method for producing thermally conductive sheet>

A thermally conductive sheet can be produced using the thermally conductive composition according to the present embodiment. The thermally conductive sheet can be produced by melt extrusion, or by a method of sandwiching the thermally conductive composition between the base materials and allowing it to pass through between the heating rolls.

Such a thermally conductive sheet has moderate flexibility and high handling property, and can be handled singly. For example, the thermally conductive sheet may be transported singly, and the heat generating component and the heat dissipating component can be joined to each other via the thermally conductive sheet at the transport destination.

EXAMPLES

Hereinafter, the present invention will be described in more detail based on Examples and Comparative Examples, but the present invention is not limited to the following Examples.

1. Production of thermally conductive composition

Materials shown in the following (A) to (E) were used to produce thermally conductive compositions having compositions shown in the following Tables 1 and 2.

[Configuration and production method of thermally conductive composition]

(Constituting components)

(A) Inorganic powder filler

(A)-1: First inorganic powder filler

Alumina 1: Average particle diameter = 40 $\mu$m
Alumina 2: Average particle diameter = 30 $\mu$m
Alumina 3: Average particle diameter = 50 $\mu$m
Alumina 4: Average particle diameter = 70 $\mu$m
Alumina 5: Average particle diameter = 110 $\mu$m
Alumina 6: Average particle diameter = 5 $\mu$m

(A)-2: Second inorganic powder filler

Alumina 7: Average particle diameter = 8 $\mu$m
Alumina 8: Average particle diameter = 15 $\mu$m
Alumina 9: Average particle diameter = 20 $\mu$m
Alumina 10: Average particle diameter = 30 $\mu$m
Alumina 11: Average particle diameter = 3.4 $\mu$m
Zinc oxide 1: Average particle diameter = 10 $\mu$m

(A)-3: Third inorganic powder filler

Alumina 12: Average particle diameter = 0.53 $\mu$m
Alumina 13: Average particle diameter = 0.83 $\mu$m
Alumina 14: Average particle diameter = 0.18 $\mu$m
Alumina 15: Average particle diameter = 5 $\mu$m
Zinc oxide 2: Average particle diameter = 0.60 $\mu$m

Note here that the average particle diameter of each of the inorganic powder fillers was measured by using a particle size distribution measuring device (SALD-7000 manufactured by Shimadzu Corporation) by a laser diffraction and scattering method (in accordance with JIS R 1629: 1997).
(B) Base oil

(B)-1: Dipentaerythritol isononanoate (ester-based oil)
(B)-2: Tri(2-ethylhexyl) trimellitate (ester-based oil)
(B)-3: Tri(3,5,5-trimethylhexyl) trimellitate (ester-based oil)

(C): Thermoplastic resin

(C)-1: Mixture of ester wax and rosin derivative. A thermoplastic resin having a mixing ratio of 150 parts by mass of rosin derivative with respect to 100 parts by mass of ester wax was used. The softening point of this thermoplastic resin is 110°C.

(C)-2: Acrylic resin (softening point: 105°C)
(C)-3: Cellulose resin (softening point: 135°C)
(C)-4: Ester resin (softening point: 70°C)

(D): Thixotropy adjusting agent

(D)-1: Organically treated bentonite
(D)-2: Organically treated sepiolite

(E) Dispersing agent

(E)-1: Acid-based hydrocarbon polymer
(E)-2: Higher fatty acid ester

The materials (A) to (E) having the compositions shown in following Tables 1 and 2 were mixed in a planetary mixer, the obtained mixture was placed in a tank of a universal mixing stirrer which had been heated at 150°C, subjected to kneading and vacuum-defoaming for 30 minutes, cooled, and then, taken out of the tank to obtain a thermally conductive composition.

[Table 1-1]

| | Inorganic powder filler | | | | | | | | Base oil | Thermoplastic resin | Total content of base oil and thermoplastic resin with respect to 100 parts by mass of inorganic powder filler (Parts by mass) | Content of thermoplastic resin with respect to 100 parts by mass of base oil (Parts by mass) | Thixotropy adjusting agent | | Dispersing agent | |
| | Type | | | Content of each component with respect to 100 parts by mass of inorganic powder filler (Parts by mass) | | | Ratio of average particle diameters | | Type | Type | | | Type | Content of thixotropy adjusting agent with respect to 100 parts by mass of base oil (Parts by mass) | Type | Content of dispersing agent with respect to 100 parts by mass of base oil (Parts by mass) |
| | First | Second | Third | First | Second | Third | $D_2/D_1$ | $D_3/D_2$ | | | | | | | | |
| Example 1 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 5.5 |
| Example 2 | Alumina 1 | Alumina 7 | Alumina 12 | 70.0 | 17.5 | 12.5 | 0.20 | 0.07 | (B)-1 | (C)-1 | 19.8 | 100 | (D)-1 | 2.5 | (E)-1 | 5.5 |
| Example 3 | Alumina 1 | Alumina 7 | Alumina 12 | 80.0 | 10.0 | 10.0 | 0.20 | 0.07 | (B)-1 | (C)-1 | 19.8 | 100 | (D)-1 | 2.5 | (E)-1 | 5.5 |
| Example 4 | Alumina 1 | Alumina 7 | Alumina 12 | 52.0 | 28.0 | 20.0 | 0.20 | 0.07 | (B)-1 | (C)-1 | 19.8 | 100 | (D)-1 | 2.5 | (E)-1 | 5.5 |
| Example 5 | Alumina 1 | Alumina 7 | Alumina 12 | 41.0 | 29.5 | 29.5 | 0.20 | 0.07 | (B)-1 | (C)-1 | 19.8 | 100 | (D)-1 | 2.5 | (E)-1 | 5.5 |
| Example 6 | Alumina 1 | Alumina 7 | Alumina 12 | 62.0 | 24.0 | 14.0 | 0.20 | 0.07 | (B)-1 | (C)-1 | 19.8 | 100 | (D)-1 | 2.5 | (E)-1 | 5.5 |
| Example 7 | Alumina 2 | Alumina 7 | Alumina 12 | 62.0 | 24.0 | 140 | 0.27 | 0.07 | (B)-1 | (C)-1 | 19.8 | 100 | (D)-1 | 2.5 | (E)-1 | 5.5 |
| [Table 1-2] | | | | | | | | | | | | | | | | |
| Example 8 | Alumina 3 | Alumina 7 | Alumina 12 | 62.0 | 24.0 | 14.0 | 0.16 | 0.07 | (B)-1 | (C)-1 | 19.8 | 100 | (D)-1 | 2.5 | (E)-1 | 5.5 |
| Example 9 | Alumina 4 | Alumina 7 | Alumina 12 | 62.0 | 24.0 | 14.0 | 0.11 | 0.07 | (B)-1 | (C)-1 | 19.8 | 100 | (D)-1 | 2.5 | (E)-1 | 5.5 |

[Table 1-2]

| Example 10 | Alumina 1 | Alumina 8 | Alumina 12 | 62.0 | 24.0 | 14.0 | 0.38 | 0.04 | (B)-1 | (C)-1 | 19.8 | 100 | (D)-1 | 2.5 | (E)-1 | 5.5 |
|---|---|---|---|---|---|---|---|---|---|---|---|---|---|---|---|---|
| Example 11 | Alumina 1 | Alumina 9 | Alumina 13 | 62.0 | 24.0 | 14.0 | 0.40 | 0.04 | (B)-1 | (C)-1 | 19.8 | 100 | (D)-1 | 2.5 | (E)-1 | 5.5 |
| Example 12 | Alumina 1 | Alumina 7 | Alumina 13 | 62.0 | 24.0 | 14.0 | 0.20 | 0.10 | (B)-1 | (C)-1 | 19.8 | 100 | (D)-1 | 2.5 | (E)-1 | 5.5 |
| Example 13 | Alumina 1 | Alumina 7 | Alumina 14 | 62.0 | 24.0 | 14.0 | 0.20 | 0.02 | (B)-1 | (C)-1 | 19.8 | 100 | (D)-1 | 2.5 | (E)-1 | 5.5 |
| Example 14 | Alumina 1 | Alumina 7 | Alumina 12 | 62.0 | 24.0 | 14.0 | 0.20 | 0.07 | (B)-1 | (C)-1 | 19.5 | 100 | (D)-1 | 5.6 | (E)-1 | 0.5 |
| Example 15 | Alumina 1 | Alumina 7 | Alumina 12 | 62.0 | 24.0 | 14.0 | 0.20 | 0.07 | (B)-1 | (C)-1 | 19.1 | 100 | (D)-1 | 9.9 | (E)-1 | 0.5 |
| Example 16 | Alumina 1 | Alumina 7 | Alumina 12 | 620 | 24.0 | 14.0 | 0.20 | 0.07 | (B)-1 | (C)-1 | 19.9 | 100 | (D)-1 | 1.5 | (E)-1 | 0.5 |
| Example 17 | Alumina 1 | Alumina 7 | Alumina 12 | 62.0 | 24.0 | 14.0 | 0.20 | 0.07 | (B)-1 | (C)-1 | 19.9 | 100 | (D)-1 | 1.2 | (E)-1 | 0.5 |
| Example 18 | Alumina 1 | Alumina 7 | Alumina 12 | 62.0 | 24.0 | 14.0 | 0.20 | 0.07 | (B)-1 | (C)-1 | 19.8 | 60 | (D)-1 | 2.5 | (E)-1 | 5.5 |
| Example 19 | Alumina 1 | Alumina 7 | Alumina 12 | 62.0 | 24.0 | 14.0 | 0.20 | 0.07 | (B)-1 | (C)-1 | 19.8 | 190 | (D)-1 | 2.5 | (E)-1 | 5.5 |
| Example 20 | Alumina 1 | Zinc oxide 1 | Alumina 12 | 62.0 | 24.0 | 14.0 | 0.25 | 0.05 | (B)-1 | (C)-1 | 19.8 | 100 | (D)-1 | 2.5 | (E)-1 | 5.5 |

[Table 2-1]

| | Inorganic powder filler | | | | | | | | Base oil | Thermo plastic resin | Total content of base oil and thermoplastic resin with respect to 100 parts by mass of inorganic powder filler (Parts by mass) | Content of thermoplastic resin with respect to 100 parts by mass of base oil (Parts by mass) | Thixotropy adjusting agent | | Dispersing agent | |
|---|---|---|---|---|---|---|---|---|---|---|---|---|---|---|---|---|
| | Type | | | Content of each component with respect to 100 parts by mass of inorganic powder filler (Parts by mass) | | | Ratio of average particle diameters | | Type | Type | | | Type | Content of thixotropy adjusting agent with respect to 100 parts by mass of base oil (Parts by mass) | Type | Content of dispersing agent with respect to 100 parts by mass of base oil (Parts by mass) |
| | First | Second | Third | First | Second | Third | $D_2/D_1$ | $D_3/D_2$ | | | | | | | | |
| Example 21 | Alumina 1 | Alumina 7 | Zinc oxide 2 | 62.0 | 24.0 | 14.0 | 0.20 | 0.08 | (B)-1 | (C)-1 | 19.8 | 100 | (D)-1 | 2.5 | (E)-1 | 5.5 |
| Example 22 | Alumina 1 | Alumina 7 | Alumina 12 | 62.0 | 24.0 | 14.0 | 0.20 | 0.07 | (B)-2 | (C)-1 | 19.8 | 100 | (D)-1 | 2.5 | (E)-1 | 5.5 |
| Example 23 | Alumina 1 | Alumina 7 | Alumina 12 | 62.0 | 24.0 | 14.0 | 0.20 | 0.07 | (B)-3 | (C)-1 | 19.8 | 100 | (D)-1 | 2.5 | (E)-1 | 5.5 |
| Example 24 | Alumina 1 | Alumina 7 | Alumina 12 | 62.0 | 24.0 | 14.0 | 0.20 | 0.07 | (B)-1 | (C)-1 | 19.8 | 100 | (D)-2 | 2.5 | (E)-1 | 5.5 |
| Example 25 | Alumina 1 | Alumina 7 | Alumina 12 | 62.0 | 24.0 | 14.0 | 0.20 | 0.07 | (B)-1 | (C)-1 | 19.8 | 100 | (D)-2 | 2.5 | (E)-2 | 5.5 |
| [Table 2-2] | | | | | | | | | | | | | | | | |
| Example 26 | Alumina 1 | Alumina 7 | Alumina 12 | 62.0 | 24.0 | 14.0 | 0.20 | 0.07 | (B)-1 | (C)-1 | 19.8 | 75 | (D)-1 | 2.5 | (E)-1 | 5.5 |
| Example 27 | Alumina 1 | Alumina 7 | Alumina 12 | 62.0 | 24.0 | 14.0 | 0.20 | 0.07 | (B)-1 | (C)-1 | 19.8 | 55 | (D)-1 | 2.5 | (E)-1 | 5.5 |
| Example 28 | Alumina 1 | Alumina 7 | Alumina 12 | 62.0 | 24.0 | 14.0 | 0.20 | 0.07 | (B)-1 | (C)-1 | 19.8 | 150 | (D)-1 | 2.5 | (E)-1 | 5.5 |
| Example 29 | Alumina 1 | Alumina 7 | Alumina 12 | 62.0 | 24.0 | 14.0 | 0.20 | 0.07 | (B)-1 | (C)-1 | 19.8 | 195 | (D)-1 | 2.5 | (E)-1 | 5.5 |

[Table 2-2]

| | | | | | | | | | | | | | | | | |
|---|---|---|---|---|---|---|---|---|---|---|---|---|---|---|---|---|
| Example 30 | Alumina 2 | | | 100.0 | | | - | - | (B)-1 | (C)-1 | 32.3 | 100 | (D)-1 | 2.5 | (E)-1 | 5.5 |
| Example 31 | | Alumina 7 | Zinc oxide 2 | | 70.0 | 30.0 | - | 0.08 | (B)-1 | (C)-1 | 24.3 | 100 | (D)-1 | 2.5 | (E)-1 | 5.5 |
| Example 32 | Alumina 2 | | Alumina 13 | 65.0 | | 35.0 | - | - | (B)-1 | (C)-1 | 24.3 | 100 | (D)-1 | 2.5 | (E)-1 | 5.5 |
| Example 33 | Alumina 1 | Alumina 7 | Alumina 12 | 62.0 | 24.0 | 14.0 | 0.20 | 0.07 | (B)-1 | (C)-2 | 19.8 | 100 | (D)-1 | 2.5 | (E)-1 | 5.5 |
| Example 34 | Alumina 1 | Alumina 7 | Alumina 12 | 62.0 | 24.0 | 14.0 | 0.20 | 0.07 | (B)-1 | (C)-3 | 19.8 | 100 | (D)-1 | 2.5 | (E)-1 | 5.5 |
| Example 35 | Alumina 1 | Alumina 7 | Alumina 12 | 62.0 | 24.0 | 14.0 | 0.20 | 0.07 | (B)-1 | (C)-4 | 19.8 | 100 | (D)-1 | 2.5 | (E)-1 | 5.5 |

[Table 2-3]

| | | | | | | | | | | | | | | | | |
|---|---|---|---|---|---|---|---|---|---|---|---|---|---|---|---|---|
| Comparative Example 1 | Alumina 1 | Alumina 10 | Alumina 12 | 62.0 | 24.0 | 14.0 | 0.75 | 0.02 | (B)-1 | (C)-1 | 19.8 | 100 | (D)-1 | 2.5 | (E)-1 | 0.5 |
| Comparative Example 2 | Alumina 1 | Alumina 7 | Alumina 15 | 62.0 | 24.0 | 14.0 | 0.20 | 0.63 | (B)-1 | (C)-1 | 19.8 | 100 | (D)-1 | 2.5 | (E)-1 | 0.5 |
| Comparative Example 3 | Alumina 5 | Alumina 9 | Alumina 12 | 62.0 | 24.0 | 14.0 | 0.18 | 0.03 | (B)-1 | (C)-1 | 19.8 | 100 | (D)-1 | 2.5 | (E)-1 | 0.5 |
| Comparative Example 4 | Alumina 6 | Alumina 11 | Alumina 12 | 62.0 | 24.0 | 14.0 | 0.68 | 0.16 | (B)-1 | (C)-1 | 19.8 | 100 | (D)-1 | 2.5 | (E)-1 | 0.5 |
| Comparative Example 5 | Alumina 1 | Alumina 7 | Alumina 12 | 620 | 24.0 | 14.0 | 0.20 | 0.07 | (B)-1 | (C)-1 | 18.6 | 100 | (D)-1 | 14.7 | (E)-1 | 0.5 |
| Comparative Example 6 | Alumina 1 | Alumina 7 | Alumina 12 | 62.0 | 24.0 | 14.0 | 0.20 | 0.07 | (B)-1 | (C)-1 | 19.9 | 100 | (D)-1 | 0.61 | (E)-1 | 0.5 |
| Comparative Example 7 | Alumina 1 | Alumina 7 | Alumina 12 | 62.0 | 24.0 | 14.0 | 0.20 | 0.07 | (B)-1 | (C)-1 | 19.8 | 20 | (D)-1 | 2.5 | (E)-1 | 5.5 |
| Comparative Example 8 | Alumina 1 | Alumina 7 | Alumina 12 | 62.0 | 24.0 | 14.0 | 0.20 | 0.07 | (B)-1 | (C)-1 | 19.8 | 250 | (D)-1 | 2.5 | (E)-1 | 5.5 |

2. Production of thermally conductive sheet

The thermally conductive composition of each of Examples and Comparative Examples was heated on one-side fluorine-treated PET film having a thickness of 0.05 mm and width of 100 mm in a heating furnace set at 100°C to make the thermally conductive composition into a melted state, and then the one-side fluorine-treated PET film of the same type was placed on the fluorine-treated surface so as to bring the fluorine-treated surfaces into contact with each other so as to be sandwiched by the thermally conductive compositions, which was allowed to pass between heating rolls set at 100°C. After cooling, the obtained product was cut into 100 mm in length, and the PET film was peeled off to obtain a thermally conductive sheet having film thicknesses of 0.1 mm and 0.5 mm.

3. Evaluation

[Evaluation of thermal conductivity]

The thermal conductivity of the thermally conductive sheets of the thermally conductive compositions of Examples and Comparative Examples produced above was measured. Specifically, the thermal conductivity of the thermally conductive sheets was measured using a transient heat measuring device (in accordance with ASTMD5470) at room temperature. Evaluation results are shown in Tables 3 and 4 (in Tables, described as "thermal conductivity").

[Evaluation of malleability]

The thermally conductive sheets of the thermally conductive compositions of Examples and Comparative Examples produced above were evaluated for malleability. Specifically, a film thickness of the thermally conductive sheet when the thermally conductive sheet having a film thickness of 0.5 mm was pressed and crushed with a pressure of 0.1 MPa applied under environment at 80°C was measured. Evaluation results are shown in Tables 3 and 4 (in Tables, described as "malleability").

[Evaluation of hardness]

Evaluation of hardness was carried out for the thermally conductive sheets of the thermally conductive compositions of the Examples and the Comparative Examples produced above. Specifically, the hardness was measured using a durometer according to JIS K 6253-3. Evaluation results are shown in Tables 3 and 4 (in Tables, described as "hardness").

[Evaluation of initial flexibility of thermally conductive sheet]

The thermally conductive sheets of the thermally conductive compositions of Examples and Comparative Examples produced above were observed for flexibility in the initial state. Specifically, when a thermally conductive sheet having a film thickness of 0.1 mm was folded, the thermally conductive sheet having no crack and having excellent flexibility was evaluated as "O (good)" for the initial flexibility. On the other hand, when a thermally conductive sheet was folded, the thermally conductive sheet having a crack and having poor flexibility was evaluated as "X (poor)" for the initial flexibility. Evaluation results are shown in Tables 3 and 4 (in Tables, described as "initial state" in "flexibility").

[Evaluation of flexibility of thermally conductive sheet after heating]

The thermally conductive sheets of the thermally conductive compositions of the Examples and the Comparative Examples produced above were evaluated for flexibility after heating. Specifically, a PET film was cut into 100 mm in length after the rolling treatment with the heating roll, and at this time, a thermally conductive sheet having a film thickness of 0.1 mm, in which only one side of the PET film was peeled off and the other side was attached to the PET film, was used as a test sample. This test sample was placed in an electric furnace that has been heated to 250°C in such a manner that a surface to which the PET film was attached faced lower side, and held for four hours. Thereafter, the test sample was taken out and cooled, and the thermally conductive sheet was bent at about 150° ten times, the flexibility of the sheet was determined based on two criteria of "O (good)" (no crack occurred), "X (poor)" (crack occurred at less than 10 times), and presence or absence of flexibility after heating was determined. Evaluation results are shown in Tables 3 and 4 (in Tables, described as "after heating" in "flexibility").

[Evaluation of sagging resistance]

The thermally conductive sheets of the thermally conductive compositions of Examples and Comparative Examples produced above were evaluated for sagging resistance. Specifically, a thermally conductive sheet having a film thickness of 0.5 mm was placed on a glass substrate and heated in a heating furnace set at 80°C for 10 minutes, and the thermally conductive sheet and the glass substrate were allowed to adhere to each other to obtain a test sample. Next, the test sample was then placed in a vertical orientation in an electric furnace that had been heated to 150°C and held for 4 hours. The test sample was taken out and cooled, and then the thermally conductive sheet was visually observed. The presence or absence of sagging was determined based on two criteria, that is, sagging was evaluated as "O (good)" (no sagging was observed) and "X (poor)" (sagging was observed) immediately after the test sample was placed in a vertical orientation in the electric furnace (initial state) and when the test sample was placed in a vertical orientation in the electric furnace and held for four hours. Evaluation results are shown in Tables 3 and 4 (in Tables, described as "initial state" and "after heating" in "sagging resistance").

[Cycle test evaluation]

The thermally conductive sheets of the thermally conductive compositions of Examples and Comparative Examples produced above were subjected to a cycle test. Specifically, a thermally conductive sheet having a film thickness of 0.5 mm which had been punched to a diameter of 10 mm was placed on an aluminum plate, and was heated in a heating furnace set at 80°C for 10 minutes to allow the thermally conductive sheet to adhere to the aluminum plate. Thereafter, 0.5 mm-spacer was provided and a slide glass was put thereon, and the thermally conductive sheet was sandwiched to obtain a test sample. The test sample was placed vertically from the ground in a heat cycle tester set to alternate between 0°C and 100°C (30 minutes each) and tested for 1000 cycles. After 1000 cycles, a migration length (mm) by which the thermally conductive sheet moved from its original location was measured. Evaluation results are shown in Tables 3 and 4 (in Tables, described as "cycle test").

[Table 3]

| | Evaluation results | | | | | | | |
|---|---|---|---|---|---|---|---|---|
| | Thermal conductivity (W/(m · K)) | Malleability (um) | Hardness | Flexibility | | Sagging resistance | | Cycle test |
| | | | | Initial state | After heating | Initial state | After heating | After 1000 cycles |
| Example 1 | 2.27 | 46 | 48 | ○ | ○ | ○ | ○ | 0.5 |
| Example 2 | 2..31 | 62 | 59 | ○ | ○ | ○ | ○ | 0.6 |
| Example 3 | 2.40 | 78 | 65 | ○ | ○ | ○ | ○ | 0.7 |
| Example 4 | 2.36 | 83 | 75 | ○ | ○ | ○ | ○ | 0.5 |
| Example 5 | 2.40 | 92 | 76 | ○ | ○ | ○ | ○ | 0.6 |
| Example 6 | 2.18 | 42 | 49 | ○ | ○ | ○ | ○ | 0.5 |
| Example 7 | 2.17 | 43 | 45 | ○ | ○ | ○ | ○ | 0.5 |
| Example 8 | 2.44 | 72 | 71 | ○ | ○ | ○ | ○ | 0.5 |
| Example 9 | 2.53 | 85 | 74 | ○ | ○ | ○ | ○ | 0.9 |

(continued)

| | Evaluation results | | | | | | | |
| --- | --- | --- | --- | --- | --- | --- | --- | --- |
| | Thermal conductivity (W/(m · K)) | Malleability (um) | Hardness | Flexibility | | Sagging resistance | | Cycle test |
| | | | | Initial state | After heating | Initial state | After heating | After 1000 cycles |
| Example 10 | 2.31 | 53 | 57 | ○ | ○ | ○ | ○ | 0.5 |
| Example 11 | 2.36 | 68 | 65 | ○ | ○ | ○ | ○ | 0.5 |
| Example 12 | 2.40 | 55 | 58 | ○ | ○ | ○ | ○ | 0.5 |
| Example 13 | 2.23 | 72 | 65 | ○ | ○ | ○ | ○ | 0.5 |
| Example 14 | 2.44 | 48 | 52 | ○ | ○ | ○ | ○ | 0.4 |
| Example 15 | 2.53 | 51 | 49 | ○ | ○ | ○ | ○ | 0.4 |
| Example 16 | 2.14 | 45 | 42 | ○ | ○ | ○ | ○ | 0.6 |
| Example 17 | 2.10 | 44 | 43 | ○ | ○ | ○ | ○ | 0.7 |
| Example 18 | 2.34 | 51 | 42 | ○ | ○ | ○ | ○ | 0.7 |
| Example 19 | 2.45 | 65 | 70 | ○ | ○ | ○ | ○ | 0.6 |
| Example 20 | 2.43 | 45 | 47 | ○ | ○ | ○ | ○ | 0.7 |

[Table 4-1]

| | Evaluation results | | | | | | | |
| --- | --- | --- | --- | --- | --- | --- | --- | --- |
| | Thermal conductivity (W/(m · K)) | Malleability (um) | Hardness | Flexibility | | Sagging resistance | | Cycle test |
| | | | | Initial state | After heating | Initial state | After heating | After 1000 cycles |
| Example 21 | 2.35 | 48 | 50 | ○ | ○ | ○ | ○ | 0.7 |
| Example 22 | 2.25 | 48 | 45 | ○ | ○ | ○ | ○ | 0.6 |
| Example 23 | 2.28 | 47 | 49 | ○ | ○ | ○ | ○ | 0.6 |
| Example 24 | 2.24 | 45 | 52 | ○ | ○ | ○ | ○ | 0.5 |

(continued)

| | Evaluation results | | | | | | | |
|---|---|---|---|---|---|---|---|---|
| | Thermal conductivity (W/(m · K)) | Malleability (um) | Hardness | Flexibility | | Sagging resistance | | Cycle test |
| | | | | Initial state | After heating | Initial state | After heating | After 1000 cycles |
| Example 25 | 2.24 | 45 | 46 | ○ | ○ | ○ | ○ | 0.5 |
| Example 26 | 2.18 | 45 | 42 | ○ | ○ | ○ | ○ | 0.8 |
| Example 27 | 2.16 | 41 | 43 | ○ | ○ | ○ | ○ | 1.1 |
| Example 28 | 2.35 | 55 | 62 | ○ | ○ | ○ | ○ | 0.7 |
| Example 29 | 2.42 | 68 | 70 | ○ | ○ | ○ | ○ | 0.6 |
| Example 30 | 1.52 | 85 | 77 | ○ | ○ | ○ | ○ | 0.9 |
| Example 31 | 1.85 | 43 | 65 | ○ | ○ | ○ | ○ | 0.6 |
| Example 32 | 1.97 | 47 | 52 | ○ | ○ | ○ | ○ | 0.8 |
| Example 33 | 2.25 | 48 | 57 | ○ | ○ | ○ | ○ | 0.7 |
| Example 34 | 2.28 | 53 | 51 | ○ | ○ | ○ | ○ | 0.6 |
| Example 35 | 2.26 | 43 | 72 | ○ | ○ | ○ | ○ | 1 |

[Table 4-2]

| | | | | | | | | |
|---|---|---|---|---|---|---|---|---|
| Comparative Example 1 | | | | × | | | | |
| Comparative Example 2 | | | | × | | | | |
| Comparative Example 3 | 2.40 | 243 | 90 | | | | | |
| Comparative Example 4 | 2.12 | 274 | 90 | | | | | |
| Comparative Example 5 | | | | × | | | | |
| Comparative Example 6 | 2.10 | 47 | 32 | ○ | ○ | ○ | × | 26 |
| Comparative Example 7 | 2.25 | 43 | 7 | ○ | ○ | ○ | × | 15 |
| Comparative Example 8 | | | | × | | | | |

As is apparent from Tables 3 and 4, the thermally conductive compositions of Examples 1 to 35 in which a formed thermally conductive sheet had type A hardness measured by a durometer of 30 or more and 80 or less showed good flexibility and sagging resistance after heating, and showed a small migration length from the original place in the cycle evaluation test. This shows that in a thermally conductive composition in which type A hardness of the formed thermally conductive sheet measured by a durometer was made to be 30 or more and 80 or less by controlling the content of each component could effectively suppress occurrence of pump-out.

**EP 4 119 615 A1**

In particular, the thermally conductive compositions of Examples 1 to 29 containing the first, second, and third inorganic powder fillers having a predetermined relation of the average particle diameters (D$_2$/D$_1$ < 0.70, and D$_3$/D$_2$ < 0.60) showed higher thermal conductivity as compared with Examples 30 to 32. It can be understood that this is because the thermally conductive compositions of Examples 1 to 29 could spread uniformly in a state in which the content of the inorganic powder filler was increased. On the other hand, the thermally conductive compositions of Examples 30 to 32 could be formed into a thermally conductive sheet, and could effectively suppress occurrence of pump-out, but the content of the inorganic powder filler was smaller as compared with the thermally conductive compositions of Examples 1 to 29. Thus, it is considered that the thermal conductivity was relatively deteriorated.

Note here that similarly, in Examples 33 to 35 in which the type of "thermoplastic resin having a softening point of 50°C or more and 150°C or less" was changed, it is shown that the occurrence of pump-out could be effectively suppressed.

On the other hand, in Comparative Examples 3 and 4 in which the formed thermally conductive sheet had type A hardness measured by a durometer of more than 80, malleability was poor at the time of heating at 80°C and pressurizing at 0.1 MPa, and it was not possible to form the thermally conductive composition into a thermally conductive thin film (forming a sheet). Furthermore, in Comparative Example 7 in which the type A hardness measured by a durometer was below 30, since a migration length from the original place after the cycle test was large, showing that the pump-out resistance was bad. Furthermore, in Comparative Examples 1, 2, 5, and 8, crack occurred after the thermally conductive sheet was folded, and the thermally conductive sheet was not able to be formed in the first place. Note here that since the thermally conductive compositions of Comparative Examples 1, 2, 5, and 8 were not able to be formed into a thermally conductive sheet, thermal conductivity, malleability, flexibility after heating, sagging resistance, and cycle test were not carried out. Furthermore, in Comparative Examples 3 and 4 in which a film thickness of the thermally conductive sheet when the thermally conductive sheet was pressed and crushed was large in the evaluation of malleability, the thermal conductivity, flexibility after heating, sagging resistance, and cycle tests were not carried out.

**Claims**

1. A thermally conductive composition comprising a base oil composition and an inorganic powder filler,

   the base oil composition comprising a base oil, a thermoplastic resin having a softening point of 50°C or more and 150°C or less, and a thixotropy adjusting agent,
   a thermally conductive sheet formed of the thermally conductive composition at a temperature being not lower than the softening point of the thermoplastic resin having a type A hardness of 30 or more and 80 or less as measured by a durometer (in accordance with JIS K 6253-3).

2. The thermally conductive composition according to claim 1, wherein the inorganic powder filler comprises a first inorganic powder filler having an average particle diameter in a range of 10 μm or more and 100 μm or less, a second inorganic powder filler having an average particle diameter being different from the average particle diameter of the first inorganic powder filler, and a third inorganic powder filler having an average particle diameter being different from the average particle diameter of the first inorganic powder filler and the average particle diameter of the second inorganic powder filler, and

   wherein the inorganic powder filler has average particle diameters satisfying the following formulae (1) and (2):

$$D_2/D_1 < 0.70 \quad (1)$$

$$D_3/D_2 < 0.60 \quad (2)$$

   wherein, in the formula, D$_1$ represents an average particle diameter of the first inorganic powder filler, D$_2$ represents an average particle diameter of the second inorganic powder filler, and D$_3$ represents an average particle diameter of the third inorganic powder filler.

3. The thermally conductive composition according to claim 2, wherein the second inorganic powder filler has an average particle diameter in a range of 1 μm or more and 50 μm or less, and
   the third inorganic powder filler has an average particle diameter in a range of 0.1 μm or more and 5 μm or less.

4. The thermally conductive composition according to claim 2 or claim 3, comprising 40 parts by mass or more and 80 parts by mass or less of the first inorganic powder filler, 10 parts by mass or more and 50 parts by mass or less of the second inorganic powder filler, and 10 parts by mass or more and 40 parts by mass or less of the third inorganic powder filler, with respect to 100 parts by mass of the inorganic powder filler.

5. The thermally conductive composition according to any one of claim 1 to claim 4, wherein the inorganic powder filler comprises at least one or more types selected from copper, aluminum, zinc oxide, magnesium oxide, aluminum oxide, aluminum nitride, and silicon carbide.

6. The thermally conductive composition according to any one of claim 1 to claim 5, wherein a total of the base oil and the thermoplastic resin is in a ratio of 5.3 parts by mass or more and 33.3 parts by mass or less with respect to 100 parts by mass of the inorganic powder filler.

7. The thermally conductive composition according to any one of claim 1 to claim 6, comprising 50 parts by mass or more and 200 parts by mass or less of the thermoplastic resin with respect to 100 parts by mass of the base oil.

8. The thermally conductive composition according to any one of claim 1 to claim 7, wherein the base oil contains at least one or more types selected from a mineral oil, a synthetic hydrocarbon oil, a diester, a polyol ester, and a phenyl ether.

9. The thermally conductive composition according to any one of claim 1 to claim 8, wherein the thermoplastic resin includes at least one or more resins selected from an ester resin, an acrylic resin, a rosin resin, and a cellulose resin.

10. The thermally conductive composition according to any one of claim 1 to claim 9, wherein the thixotropy adjusting agent contains at least one or more types selected from bentonite, mica, kaolin, sepiolite, saponite, and hectorite.

11. The thermally conductive composition according to any one of claim 1 to claim 10, comprising 1 part by mass or more and 10 parts by mass or less of the thixotropy adjusting agent with respect to 100 parts by mass of the base oil.

## INTERNATIONAL SEARCH REPORT

| | International application No. |
|---|---|
| | PCT/JP2021/009671 |

**A. CLASSIFICATION OF SUBJECT MATTER**
Int.Cl. C08L91/00(2006.01)i, C08L101/12(2006.01)i, C09K5/14(2006.01)i,
C08K3/013(2018.01)i, C08K3/34(2006.01)i
FI: C08L101/12, C08K3/013, C08K3/34, C09K5/14E, C08L91/00
According to International Patent Classification (IPC) or to both national classification and IPC

**B. FIELDS SEARCHED**

Minimum documentation searched (classification system followed by classification symbols)
Int.Cl. C08L1/00-101/16, C09K5/14, C08K3/00-13/08

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-89756 A (SAINT-GOBAIN PERFORMANCE PLASTICS CORPORATION) 03 April 2001 (2001-04-03), claims, examples | 1-11 |
| A | JP 2020-2211 A (SUMITOMO METAL MINING CO., LTD.) 09 January 2020 (2020-01-09), claims, examples | 1-11 |
| A | JP 2008-280516 A (COSMO OIL LUBRICANTS CO., LTD.) 20 November 2008 (2008-11-20), claims, examples | 1-11 |
| A | JP 6627947 B1 (SUMITOMO METAL MINING CO., LTD.) 08 January 2020 (2020-01-08), claims, paragraphs [0077], [0078], examples | 1-11 |

☐ Further documents are listed in the continuation of Box C.      ☒ See patent family annex.

| | |
|---|---|
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 21 April 2021 | 11 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2021/009671 |

| | | |
|---|---|---|
| JP 2001-89756 A | 03 April 2001 | US 2003/0039825 A1<br>claims, examples<br>EP 1067164 A1 |
| JP 2020-2211 A | 09 January 2020 | (Family: none) |
| JP 2008-280516 A | 20 November 2008 | US 2010/0065774 A1<br>claims, examples<br>WO 2008/126829 A1<br>CN 101657528 A |
| JP 6627947 B1 | 08 January 2020 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001089756 A
- JP 2004075760 A
- JP 2007150349 A
- JP 4713161 B